# EUROPEAN PATENT APPLICATION

(11) **EP 4 059 349 A1**
(43) Date of publication of application: **21.09.2022**
(21) Application number: 22162462.0
(22) Date of filing: 16.03.2022
(51) Int. Cl.: A23C 3/03, A23C 3/033, A23C 3/037, A23C 7/02, A23L 3/18, A23L 3/22, B08B 9/032

(54) **A METHOD FOR REMOVING DEPOSITS INSIDE A SECTION OF A FOOD PROCESSING SYSTEM**

(30) Priority: 19.03.2021 EP 21163656
(71) Applicant: Tetra Laval Holdings & Finance S.A., 1009 Pully (CH); Berling, Niklas, 22738 Lund (SE)
(72) Inventor: The designation of the inventor has not yet been filed
(74) Representative: Tetra Pak - Patent Attorneys SE

(57) **Abstract**

A method (500) for removing deposits (202) inside a section (112) in a food processing system (100) is provided. The method (500) comprises introducing (502) a cleaning liquid into the section (112), inducing (504) boiling of the cleaning liquid by adjusting a pressure (P) and/or a temperature (T) inside the section (112) to a first pressure value (P1) and/or a first temperature value (T1), thereby forming bubbles (200) in the cleaning liquid, imploding (506) the bubbles (200) by adjusting the pressure (P) and/or temperature (T) to a second pressure value (P2) and/or a second temperature value (T2), thereby forming a mechanical impact on the deposits such that these are released from the section (112), and transferring (508) the deposits (202) being released by the cleaning liquid out from the section (112).

## Description

### Technical Field

The invention relates to food processing technology. More particularly, it is related to a method for removing deposits inside a section in a food processing system.

### Background Art

An important part of the food processing industry is the cleaning of the food processing systems. Today, there are high demands on the cleaning process in order to ensure both quality and food safety. The cleaning process is preferably automatic, without any need for dismantling the system. A common way of doing this is to repeatedly circulate cleaning fluid and then rinsing with hot water in the system until any contaminations or product residues has been dissolved and removed. The product residue can for instance be fouling in hot areas of the system, which can be especially difficult to remove. One of the example for the food processing industry is the milk processing industry.

Cleaning can be a costly process both in the sense of high fluid consumption and in down-time which instead could have been used to produce more product. It may be especially costly when severe fouling is generated, which can require many cycles of cleaning and rinsing before the cleaning is complete. Therefore, there is a need for a cleaning process with improved efficiency.

### Summary

It is an object of the invention to at least partly overcome one or more of the above-identified limitations of the prior art. In particular, it is an object to provide improved solutions for cleaning sections of food processing systems.

It has been realized that by inducing boiling and implosions of the cleaning liquid in the cleaning phase, an improved mechanical cleaning of the system can be achieved. This means that the amount of cleaning liquid can be reduced. Further, the time of the cleaning process can be shortened.

According to a first aspect, a method for removing deposits inside a section in a food processing system is provided. The method may comprise: introducing a cleaning liquid into the section, inducing boiling of the cleaning liquid by adjusting a pressure (P) and/or a temperature (T) inside the section to a first pressure value (P1) and/or a first temperature value (T1), thereby forming bubbles in the cleaning liquid, imploding the bubbles by adjusting the pressure (P) and/or temperature (T) to a second pressure value (P2) and/or a second temperature value (T2), thereby forming a mechanical impact on the deposits such that these are released from the section, transferring the deposits being released by the cleaning liquid out from the section.

The deposits may be residue of the food product which has been left on the inside of the food processing system.

The section may be a section where the food product is heated. The section may be a section where a relatively high amount of deposits are generated, as a result of the food product being heated.

The cleaning liquid may be any cleaning liquid commonly used for cleaning food processing systems. As an example, the cleaning liquid may comprise lye.

Bubbles may also be referred to as cavities. The bubbles could be such bubbles generated when a liquid is boiling.

It should be noted that inducing boiling may be done either by adjusting only the pressure, or by adjusting only the temperature, or by adjusting both the pressure and temperature. In other words, the first and second pressure value may be the same value. Similarly, the first and second temperature value may be the same value.

The mechanical impact may be interpreted as an increased motion of the liquid. The increased motion may be in a direction different from the flow direction of the cleaning liquid.

A possible associated advantage is that fewer cleaning cycles may be required due to the mechanical impact formed by the induced boiling and imploding of bubbles more effectively can remove the deposits. Thus, less cleaning liquid and rinsing water is required. Further, fewer cleaning cycles means a shorted cleaning time.

The section may be a holding cell arranged to hold a food product for a pre-determined time at a pre-determined temperature during a production phase.

In the context of this document, to hold does not mean to keep the food steady, instead allow to flow but holding at a pre-determined temperature for a pre-determined time. One example can be the holding cell of UHT milk production as known in the prior art wherein the milk is heated to UHT process temperatures and kept at a certain temperature like 140-150 °C for a few seconds by allowing the flow of milk in a pipe system (the holding cell) before a cooling step in the process.

The step of inducing boiling by adjusting the pressure (P) and/or the temperature (T) may involve reducing pressure (P) by opening a counter-pressure valve arranged downstream the section, and the step of imploding the bubbles by adjusting the pressure (P) and/or temperature (T) may involve increasing pressure (P) by closing the counter-pressure valve.

The step of inducing boiling by adjusting the pressure (P) and/or temperature (T) may involve increasing temperature (T) by a heating unit in the system before the section.

The heating unit may be selected from a group consisting of steam injector, steam infuser and indirect heat exchanger.

The cleaning liquid may be a caustic liquid, sometimes only referred to as caustic. The caustic liquid may be a mixture of caustic soda and water. The caustic liquid may be lye. The method may further comprise feeding out the caustic liquid from the section, rinsing the section with water, introducing an acidic liquid into the section, feeding out the acidic liquid from the section, and rinsing the section with water.

The cleaning liquid may be an acidic liquid, sometimes only referred to as acid. The step of introducing the cleaning liquid may be preceded by introducing a caustic liquid into the section, feeding out the caustic liquid from the section, and rinsing the section with water.

A temperature of the cleaning liquid may be between 110 and 150 C.

According to a second aspect, a food processing system is provided. The food processing system may comprise: a product inlet pipe arranged to transport a food product during a production phase and a cleaning liquid during a cleaning phase, a heating unit arranged to heat the food product during a production phase and the cleaning liquid during a cleaning phase, a section arranged downstream the heating unit and configured to hold the food product during the production phase and the cleaning liquid during the cleaning phase, a counter-pressure valve arranged downstream the section, wherein the counter-pressure valve may be configured to adjust a pressure (P) inside the section, and a control unit configured to, during the cleaning phase, induce boiling of the cleaning liquid by adjusting a pressure (P) and/or a temperature (T) inside the section, thereby forming bubbles (200) in the cleaning liquid, and to implode the bubbles by adjusting the pressure (P) and/or temperature (T), thereby forming a mechanical impact on deposits in the section such that these are released.

The heating unit may be configured to adjust a temperature (T) inside the section during the production phase and during the cleaning phase.

The section may be a holding cell arranged downstream the heating unit and upstream the counter-pressure valve. The heating unit may be a steam injector or a steam infuser.

The heating unit may be a heat exchanger. It may be an indirect heat exchanger, for instance tubular heat exchanger and/or a plate heat exchanger and/or a scraped surface heat exchanger.

The food processing system may further comprise a pressure sensor arrangement configured to measure a pressure drop over the section, wherein the control unit may be further configured to alternate between the first pressure value (P1) and/or first temperature value (T1) and the second pressure value (P2) and/or second temperature value (T2) until the pressure drop is below a threshold.

A possible associated advantage may be that a sequence of mechanical impacts can be formed to even further increase the efficiency of the cleaning.

A temperature of the cleaning liquid may be between 110 and 150 C.

According to a fourth aspect, a non-transitory computer-readable storage medium having stored thereon program code portions for implementing the method according to the first aspect when executed on a device having processing capabilities is provided.

Still other objectives, features, aspects and advantages of the invention will appear from the following detailed description as well as from the drawings. The same features and advantages described with respect to one aspect are applicable to the other aspects unless explicitly stated otherwise.

### Brief Description of the Drawings

Embodiments of the invention will now be described, by way of example, with reference to the accompanying schematic drawings, in which
Fig. 1 illustrates, by way of example, a food processing system.
Fig. 2A - 2C illustrates a section of the food processing system in three different stages.
Fig. 3 is a graph illustrating different pressure and temperature values.
Fig. 4 illustrates, by way of example, an alternative food processing system.
Fig. 5A and Fig. 5B are flowcharts illustrating the steps of a method for removing deposits inside a section in a food processing system.

### Detailed description

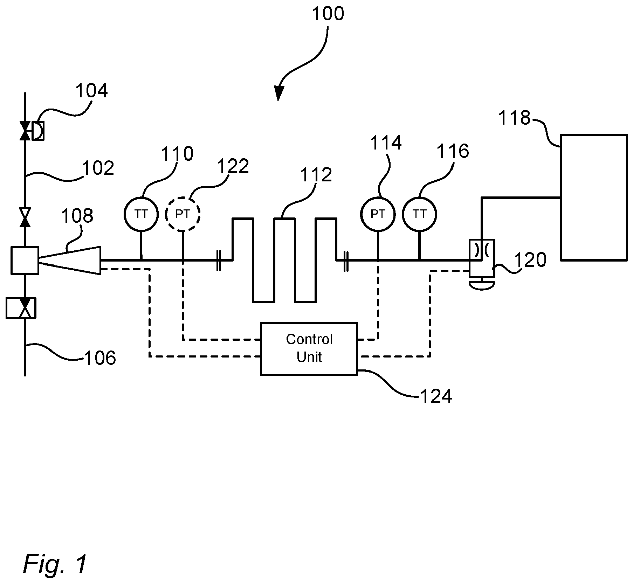

Fig. 1 illustrates, by way of example a food processing system 100, particularly a milk processing system, for instance a milk processing system for UHT milk production. The system may comprise a product inlet pipe 106. During a production phase, the product inlet pipe 106 may transport a food product like milk. During a cleaning phase, the product inlet pipe 106 may transport a cleaning liquid.

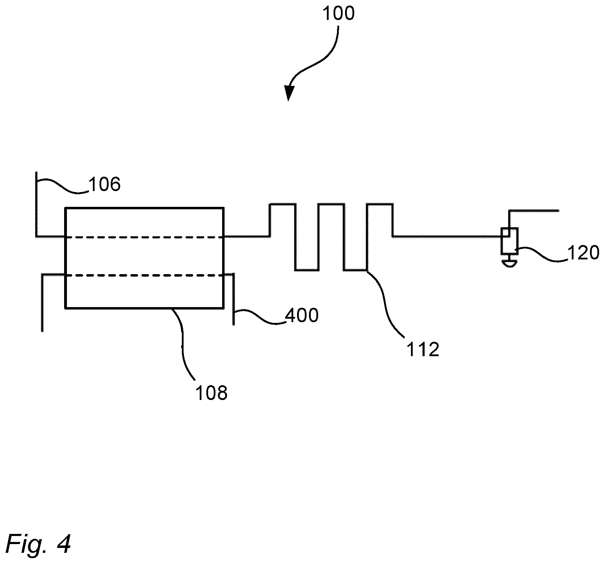

The food processing system 100 may further comprise a heating unit 108, herein illustrated as a steam injector as a direct heating unit. Alternatively, the heating unit 108 may be a steam infuser as again a direct heating unit or a heat exchanger as illustrated in Fig. 4 as an indirect heating unit. The heating unit 108 may be arranged to heat the food product during the production state. The heating unit 108 may be arranged to heat the cleaning liquid during the cleaning phase.

The food processing system 100 may further comprise a steam inlet pipe 102 and a steam control valve 104 to supply the steam injector with steam.

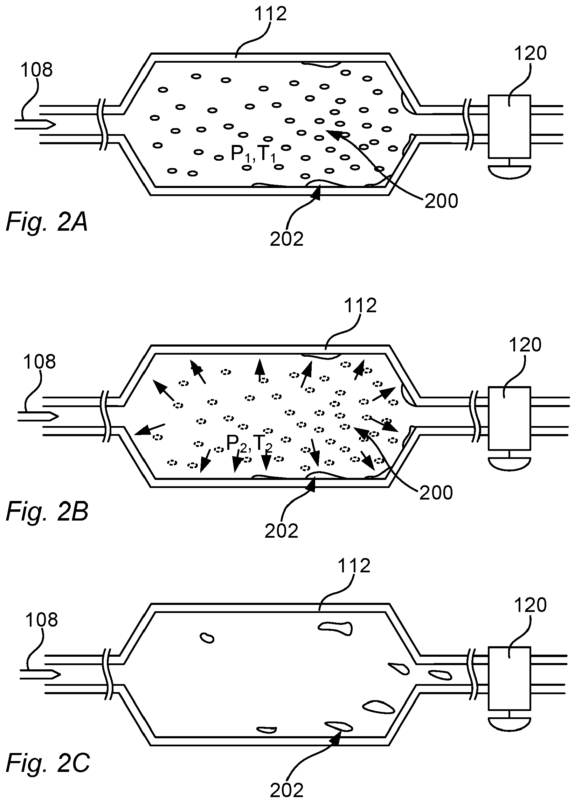

The food processing system 100 may further comprise a section 112 arranged downstream the heating unit 108. The section 112 may be configured to hold the food product during the production phase for a certain time; for instance, to keep the milk heated by the heating unit at a certain temperature for a certain time as known in the prior art. The section 112 may be further configured to hold the cleaning liquid during the cleaning phase for a certain time. The section 112 may be a holding cell. The section 112 may be arranged to hold the food product for a pre-determined time at a pre-determined temperature during the production phase. The section 112 is further discussed in connection to Fig. 2A to 2C.

The food processing system 100 may further comprise a counter-pressure valve 120. The counter-pressure valve 120 may be arranged downstream the section 112. The counter-pressure valve 120 may be configured to adjust the pressure P inside the section 112. The food processing system 100 may further comprise a vessel 118 with under pressure downstream the counter-pressure valve 120. The vessel 118 may flash of the added steam so that the product is not diluted.

The food processing system 100 may further comprise a control unit 124. The control unit 124 may be configured to, during the cleaning phase, induce boiling of the cleaning liquid by adjusting a pressure P and/or a temperature T inside the section 112, thereby forming bubbles 200 in the cleaning liquid. The control unit 124 may be further configured to implode the bubbles by adjusting the pressure P and/or the temperature T. The forming and imploding of bubbles may form a mechanical impact on deposits 202 in the section 112 such that the deposits 202 are released.

The food processing system 100 may further comprise a pressure sensor arrangement 114, 122, configured to measure a pressure drop over the section 112. The control unit 124 may be further configured to alternate between a first pressure value P1 and/or a first temperature value T1 and the second pressure value P2 and/or the second temperature value T2 until the pressure drop is below a threshold. The pressure drop may namely be an indication that there is no or only minor deposits left in the section, and thus subjecting the section to the mechanical impact caused by the implosions may continue up until the pressure drop is below the threshold. In combination with this or as an alternative, the cleaning liquid leaving the section may be analyzed. For instance, by analyzing conductivity and/or transparency of the cleaning liquid, information about how much deposits that are left can be gathered.

The food processing system 100 may further comprise a temperature sensor arrangement 110, 116 to measure a temperature before and after the section 112.

It is noted that the food processing system 100 may comprise additional components as well, which is well known from food processing systems commonly used today. The illustration in Fig. 1 is just a simplified view for illustrative purposes.

Fig. 2A to 2C illustrates the section 112 of Fig. 1 in a close-up view. More particularly, they show the section 112 in three different stages. Also shown is the heating unit 108 arranged upstream from the section 112. Herein, the heating unit 108 is illustrated as a steam injector, but it could be any heating unit suitable for heating the cleaning fluid. Further, the counter-pressure valve 120 is shown downstream from the section 112.

In Fig. 2A the cleaning liquid is in a boiling state. The cleaning liquid has a first pressure value P1 and a first temperature value T1. In the boiling state, bubbles 200 are formed. The deposits 202 are also shown. The deposits 202 may be fouling, for instance may be food product which has been burnt onto the walls by the heat.

In Fig. 2B the cleaning liquid is in a non-boiling state where the bubbles 200 implode. The cleaning liquid has been adjusted to a second pressure value P2 and/or a second temperature value T2. The transition between the state of Fig. 2A and Fig. 2B causes increased motion of the cleaning liquid. This motion can be in any direction as illustrated by the arrows. In other words, the cleaning liquid gets a motion in not only the flow direction. This may cause a mechanical impact on the deposits 202. The mechanical impact may cause the deposits 202 to be released from the section 112, as illustrated in Fig. 2C. The released deposits 202 can then be transported out from the section 112 by the cleaning liquid.

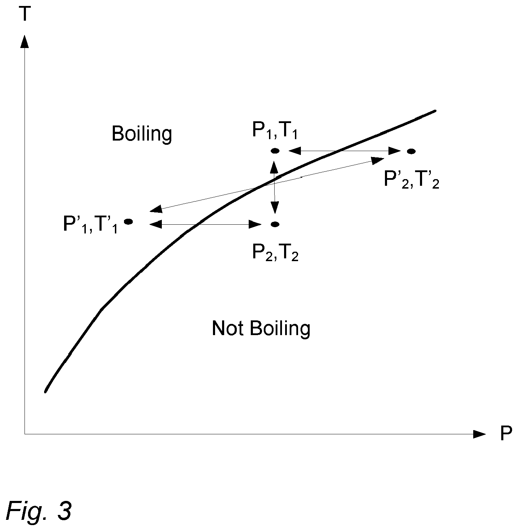

Fig. 3 is a graph illustrating how the change in pressure and/or temperature can affect the boiling or imploding of bubbles in the cleaning liquid.

More particularly, the graph illustrates the relationship between pressure and temperature of liquids and how it affects the boiling point. The graph represents the border between the liquid being in a boiling state and a non-boiling state. When a pressure and temperature pair lies above the graph, the liquid is in the boiling state. In contrast, when the pressure and temperature pair lies below the graph, the liquid is in the non-boiling state. When the liquid transitions from the non-boiling state to the boiling state, bubbles can be formed. When the liquid transitions from the boiling state to the non-boiling state, the bubbles can implode.

The transition between the boiling state and the non-boiling state can be done in a number of different ways.

In one example, boiling of the liquid can be induced when the liquid has the first pressure value P1 and the first temperature value T1. The liquid can then be transitions to the non-boiling state to implode the bubbles by adjusting only the pressure, so that the horizontal transition of Fig. 3 to second pressure value P2' and second temperature value T2' is achieved. Alternatively, only the temperature may be adjusted, so that the vertical transition of Fig. 3 to the second pressure value P2 and second temperature value T2 is achieved.

In another example, boiling of the liquid can be induced when the liquid has the first pressure value P1' and the first temperature value T1'. The liquid can be transitioned to the non-boiling state by reaching the second pressure value P2 and second temperature value T2 by adjusting mainly the pressure, or by reaching the second pressure value P2' and second temperature value T2' by adjusting both the temperature and pressure.

It should be noted that the pressure and temperature pairs of Fig. 3 and the transitions in between are to be regarded as non-limiting examples. The transition between the boiling state and the non-boiling state can be done by adjusting any amount of temperature and pressure to transition between any two pairs of pressure and temperature values.

Fig. 4 illustrates another example of a food processing system 100. The food processing system 100 may comprise the product inlet pipe 106. The food processing system 100 may further comprise the heating unit 108, herein illustrated as a heat exchanger. The heat exchanger may for instance be a tube heat exchanger or a plate heat exchanger. The heat exchanger may be connected to a heat exchanger fluid pipe 400, which supplies the heat exchanger with hot or cold fluid. The food processing system 100 may further comprise the section 112. The food processing system 100 may further comprise the counter-pressure valve 120. Even though not illustrates herein, the food processing system 100 illustrated in Fig. 4 may comprise any of the components described in connection to Fig. 1. Further, any features mentioned regarding the components described in connection to Fig. 1 may also be applicable to the food processing system 100 illustrated in Fig. 4.

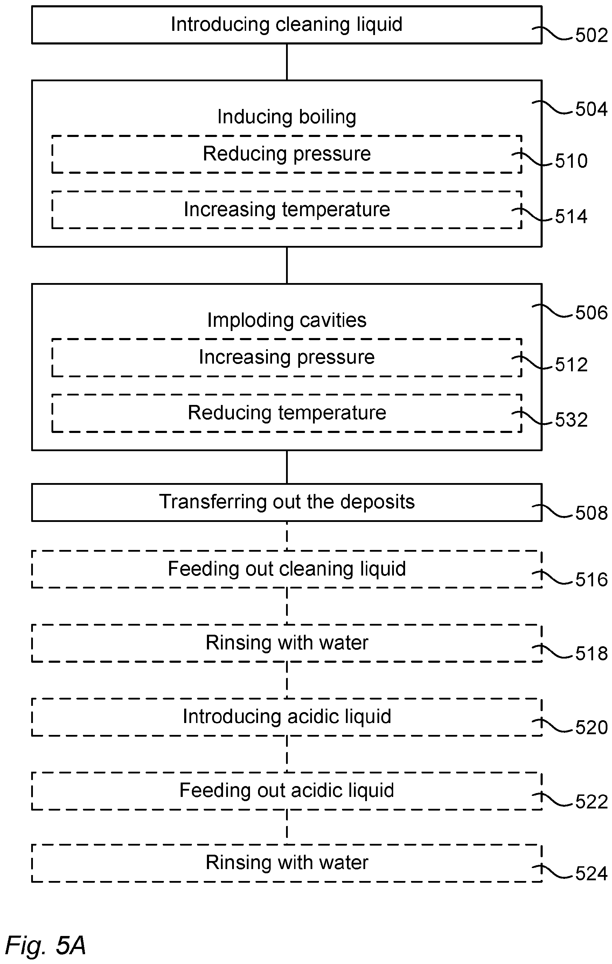

Fig. 5A is a flow chart illustrating the steps of a method 500 for removing deposits inside a section in a food processing system by way of example.

In a first step 502, a cleaning liquid may be introduced into the section.

In a second step 504, boiling of the cleaning liquid may be induced by adjusting a pressure (P) and/or a temperature (T) inside the section to a first pressure value (P1) and/or a first temperature value (T1), thereby forming bubbles in the cleaning liquid.

In a third step 506, the bubbles may be imploded by adjusting the pressure (P) and/or temperature (T) to a second pressure value (P2) and/or a second temperature value (T2), thereby forming a mechanical impact on the deposits such that these are released from the section.

In a fourth step 508, the deposits being released may be transferred out from the section by the cleaning liquid.

Optionally, the step of inducing 504 boiling by adjusting the pressure (P) and/or the temperature (T) may involve reducing 510 pressure (P) by opening a counter-pressure valve arranged downstream the section.

Optionally, the step of imploding 506 the bubbles by adjusting the pressure (P) and/or temperature (T) may involve increasing 512 pressure (P) by closing the counter-pressure valve.

Optionally, the step of inducing 504 boiling by adjusting the pressure (P) and/or temperature (T) may involve increasing 514 temperature (T) by a heating unit in the system before the section.

Optionally, the step of imploding 506 the bubbles by adjusting the pressure (P) and/or temperature (T) may involve reducing 532 temperature (T).

The cleaning liquid may be a caustic liquid. Optionally, in a fifth step 516, the caustic liquid may be fed out from the section.

Optionally, in a sixth step 518, the section may be rinsed by water.

Optionally, in a seventh step 520, an acidic liquid may be introduced into the section.

Optionally, in a eighth step 522, the acidic liquid may be fed out from the section.

Optionally, in a ninth step 524, the section may be rinsed with water.

Even though described in a certain order, the different steps may also be performed in other orders as well as multiple times. For instance, the steps of inducing 504 boiling and imploding 506 the bubbles may be repeated at least three times. Alternatively, they may be repeated until a pressure drop over the section is below a threshold.

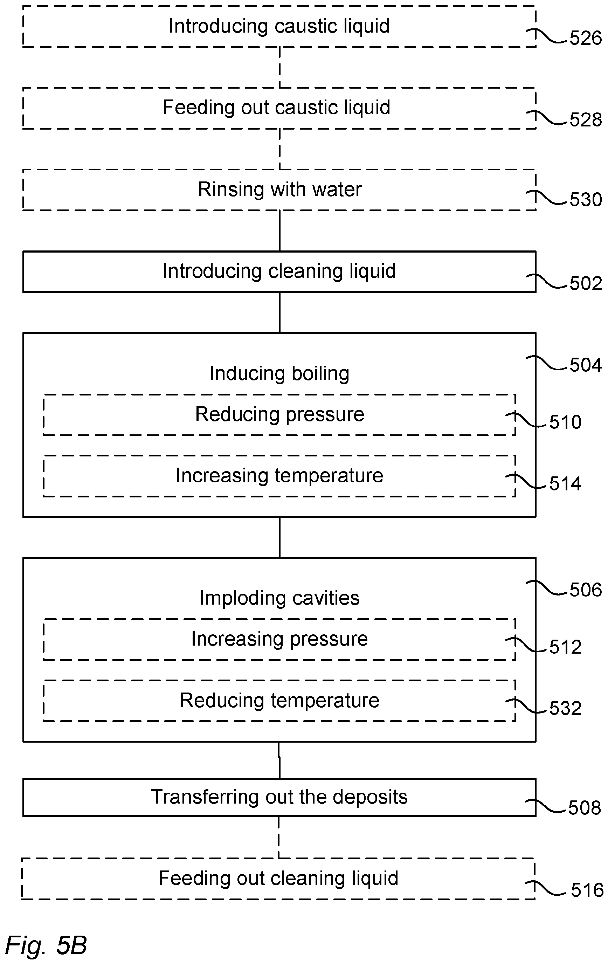

Fig. 5B is a flow chart illustrating the steps of an alternative method 500 for removing deposits inside a section in a food processing system.

The cleaning liquid is in this example an acidic liquid. The alternative method may comprise the steps 502 - 508 as described above, as well as any optional sub-steps related to the steps 502 - 508. Further, the step of introducing the cleaning liquid 502 may be proceeded by the following steps.

In an optional tenth step 526, a caustic liquid may be introduced into the section.

In an optional eleventh step 528, the caustic liquid may be fed out from the section.

In an optional twelfth step 530, the section may be rinsed with water.

Even though described in a certain order, the different steps may also be performed in other orders as well as multiple times. For instance, the steps of inducing 504 boiling and imploding 506 the bubbles may be repeated at least three times. Alternatively, they may be repeated until a pressure drop over the section is below a threshold.

In a possible embodiment, steps of 504, 506 and 508 and their optional sub steps may be performed both when the caustic liquid and the acidic liquid are introduced.

From the description above follows that, although various embodiments of the invention have been described and shown, the invention is not restricted thereto, but may also be embodied in other ways within the scope of the subject-matter defined in the following claims.

## Claims

1. A method (500) for removing deposits (202) inside a section (112) in a food processing system (100), said method comprising
introducing (502) a cleaning liquid into the section (112),
inducing (504) boiling of the cleaning liquid by adjusting a pressure (P) and/or a temperature (T) inside the section (112) to a first pressure value (P1) and/or a first temperature value (T1), thereby forming bubbles (200) in the cleaning liquid,
imploding (506) the bubbles (200) by adjusting the pressure (P) and/or temperature (T) to a second pressure value (P2) and/or a second temperature value (T2), thereby forming a mechanical impact on the deposits such that these are released from the section (112),
transferring (508) the deposits (202) being released by the cleaning liquid out from the section (112).

2. The method (500) according to claim 1, wherein the section (112) is a holding cell arranged to hold a food product for a pre-determined time at a pre-determined temperature during a production phase.

3. The method (500) according to any one of the preceding claims, wherein the step of inducing (504) boiling by adjusting the pressure (P) and/or the temperature (T) involves reducing (510) pressure (P) by opening a counter-pressure valve (120) arranged downstream the section (112), and the step of imploding (506) the bubbles (202) by adjusting the pressure (P) and/or temperature (T) involves increasing (512) pressure (P) by closing the counter-pressure valve (120).

4. The method (500) according to any one of the preceding claims, wherein the step of inducing (504) boiling by adjusting the pressure (P) and/or temperature (T) involves increasing (514) temperature (T) by a heating unit (108) in the system (100) before the section (112).

5. The method (500) according to claim 4, wherein the heating unit is selected from a group consisting of steam injector, steam infuser and indirect heat exchanger.

6. The method (500) according to any one of the preceding claims, wherein the cleaning liquid is a caustic liquid, and the method further comprises
feeding out (516) the caustic liquid from the section (112),
rinsing (518) the section (112) with water,
introducing (520) an acidic liquid into the section (112),
feeding out (522) the acidic liquid from the section (112), and
rinsing (524) the section (112) with water.

7. The method (500) according to any one of the preceding claims, wherein the cleaning liquid is an acidic liquid and the step of introducing (502) the cleaning liquid is preceded by
introducing (526) a caustic liquid into the section (112),
feeding out (528) the caustic liquid from the section (112), and
rinsing (530) the section (112) with water.

8. The method according to any one of the preceding claims, wherein a temperature of the cleaning liquid is between 110 and 150 C.

9. A food processing system (100) comprising
a product inlet pipe (106) arranged to transport a food product during a production phase and a cleaning liquid during a cleaning phase,
a heating unit (108) arranged to heat the food product during a production phase and the cleaning liquid during a cleaning phase ,
a section (112) arranged downstream the heating unit (108) and configured to hold the food product during the production phase and the cleaning liquid during the cleaning phase,
a counter-pressure valve (120) arranged downstream the section (112),
wherein the counter-pressure valve (120) is configured to adjust a pressure (P) inside the section (112),
a control unit (124) configured to, during the cleaning phase, induce boiling of the cleaning liquid by adjusting a pressure (P) and/or a temperature (T) inside the section (112), thereby forming bubbles (200) in the cleaning liquid, and to implode the bubbles (202) by adjusting the pressure (P) and/or temperature (T), thereby forming a mechanical impact on deposits (202) in the section (112) such that these are released.

10. The food processing system (100) according to claim 9, wherein the heating unit (108) is configured to adjust a temperature (T) inside the section (112) during the production phase and during the cleaning phase.

11. The food processing system (100) according to claim 9-10, wherein the heating unit (108) is a steam injector or a steam infuser.

12. The food processing system (100) according to claim 9-10, wherein the heating unit is a heat exchanger.

13. The food processing system (100) according to any one of the claims 9 to 12, further comprising
a pressure sensor arrangement (114, 122) configured to measure a pressure drop over the section (112),
wherein the control unit (124) is further configured to alternate between the first pressure value (P1) and/or first temperature value (T1) and the second pressure value (P2) and/or second temperature value (T2) until the pressure drop is below a threshold.

14. The food processing system (100) according to any one of the claims 9 to 13, wherein a temperature of the cleaning liquid is between 110 and 150 C.

15. A non-transitory computer-readable storage medium having stored thereon program code portions for implementing the method according to any one of claims 1 to 8 when executed on a device having processing capabilities.
